# EUROPEAN PATENT SPECIFICATION

(11) **EP 0 586 893 B1**
(45) Date of publication and mention of the grant of the patent: **25.03.1998**
(21) Application number: 93112671.8
(22) Date of filing: 07.08.1993
(51) Int. Cl.: H04N 9/64, H04N 9/79

(54) **Circuit arrangement for detecting cross colour**
Schaltung zum Detektieren von Cross-Color
Circuit pour la détection d'intermodulation de couleur

(30) Priority: 20.08.1992 FI 923741
(43) Date of publication of application: 16.03.1994
(73) Proprietor: NOKIA TECHNOLOGY GmbH, 75175 Pforzheim (DE)
(72) Inventor: Lundén, Vesa, SF-33720 Tampere (FI)

(56) References cited:
- EP-A- 0 217 649
- EP-A- 0 368 013
- DE-A- 2 821 183
- DE-A- 3 107 736
- DE-A- 3 107 737
- DE-A- 3 316 080
- DE-A- 3 633 716
- GB-A- 2 078 054
- US-A- 4 167 020
- US-A- 4 814 863
- US-A- 4 982 271
- US-A- 5 103 296
- PATENT ABSTRACTS OF JAPAN vol. 11, no. 245 (E-531)11 August 1987 & JP-A-62 058 795 (MITSUBISHI ELECTRIC CORP) 14 March 1987
- Digital Television, C.P. Sandbank, JOHN WILEY & SONS

## Description

The present invention relates to a circuit arrangement with which from a sampled PAL video signal received in composite form the cross colour generating pixels are detected.

The picture information in the PAL and NTSC television systems is transmitted in the form of a so-called composite signal, consisting of luminance signal Y, modulated colour difference signals U, V, and of synchronizing signals. In the television and video receiver, the colour difference and luminance signals have to be separated in order to be demodulated.

The incomplete separation of chrominance and luminance signals causes so-called cross-luminance (incorrect interpretation of a chrominance signal as a luminance signal) and cross-chrominance (incorrect interpretation of a luminance signal as a chrominance signal). A rather successful separation can be achieved by using a comb filter, the frequency response whereof being appropriate for said separation. Since the phase of the auxiliary carrier wave of the chrominance signal changes 180 degrees after each line (NTSC system) or after every second line (PAL system), the samples taken from a composite signal, located at one line (NTSC) or two lines (PAL) from one another, can be added, so that the chrominance signals virtually cancel each other in an ideal case, and a luminance signal is left behind. The filter to which a sampled video signal is conducted comprises in the simplest form not more than a few delays of standard length (duration of a line), and addition and subtraction calculation circuits and a bandpass filter prior to the entire comb filter or in the chrominance branch thereof, with which the comb filtering is restricted to the vicinity of the colour subcarrier in a frequency range in which the colour information most probably is present. In practice, also conventional bandpass filtering is added into the comb filter, whereby comb filtering is used in one situation and lowpass filtering in another.

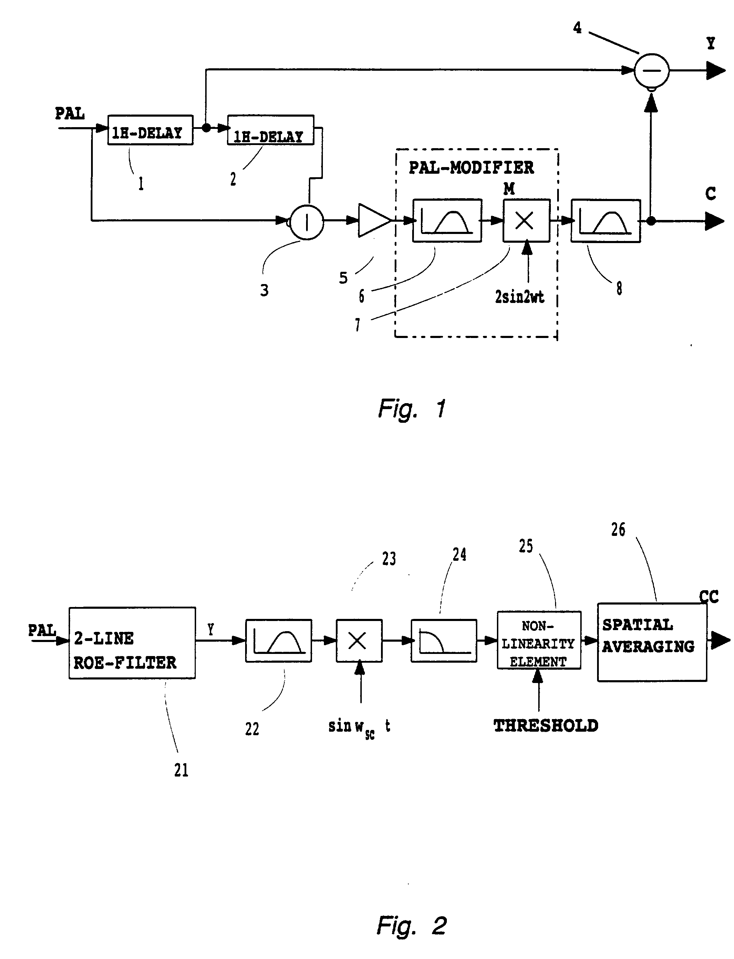

A prior art basic circuit arrangement of a comb filter is the so-called Roe comb filter. Such Roe comb filter is described in "Digital Television", edited by C.P. Sandbank and published by John Wiley & Sons in part 4 "Digital Encoding and Decoding of Composite Television Signals" by C.K.P. Clarke. A Roe comb filter is shown in Fig. 1. The filter comprises two one-line long delays 1 and 2. The samples at the ends of the delays and a sample in the middle thereof form a 1*3 window, from the centremost composite signal (lying between the delays) whereof the luminance signal Y and the chrominance signal C have to be separated, which chrominance signal can be divided further into the components U and V thereof. The signals at the beginning of delay line 1 and at the end of delay line 2, phase difference whereof is 180 degrees according to the PAL system, are subtracted from each other in a subtractor 3. The subtractor eliminates the phase difference of the signals, the result thereof after the averaging taking place in element 5 being a signal, being mostly of chrominance but having a 90 degree phase difference compared with the signal under study and residing between the delay lines. Said phase difference is eliminated and the incorrect PAL switch sense (the sign of the colour difference signal V) is inverted using a PAL modifier M. The modifier comprises a filter 6 for filtering the signal, unless it has been filtered earlier, as well as a mixer 7, the inputs whereof being the filtered chrominance signal and a sine signal with a frequency twice in magnitude of the frequency of the colour subcarrier. The phase of the signal to be obtained is determined by the phase of said sine frequency relative to the phase of the chrominance signal. From the mixing results of the mixer the frequencies are filtered off in the chrominance filter which are multiples of the subcarrier frequency. This results in a chrominance signal the switch sense of the V component whereof is inverted and into the phase of the U and V components whereof a 90 degree addition has been added. The signal derived from the bandpass filter 8 is the desired chrominance signal and the luminance signal Y is produced by subtracting from the composite signal the chrominance signal C in the subtractor 4. The above aspects are known in the art and are assumed to be such in the description of the present invention.

However, the comb filtering also causes cross chrominance and cross luminance. The cross luminance is seen e.g. in a TV test picture as a "running" of the luminance points occurring in the vicinity of the vertical edges of the colour bars in the TV test picture, while the cross chrominance is seen as extra colours on top of the parts of such picture, containing high horizontal luminance frequencies, such as in the black-and-white shirt of an ice hockey referee. In the non-adaptive comb filters errors are caused by a slight correlation between the delayed signals entering the filter when the combing crosses the horizontal colour edge. Therefore, the combing with non-adaptive filters should not cross an edge like that, and various types of adaptive comb filters have been developed, one of their common features being that combing beyond the horizontal colour edge is avoided as much as possible. For this reason, an edge detector is needed in the filters. The chrominance signal produced by comb filtering is usually filtered with a narrow-band filter in order to reduce further the cross-chrominance. Unless no factor causing cross-chrominance exists, chrominance information becomes, however, lost unnecessarily in the narrow-band filter.

The problem of cross-chrominance is also addressed in DE-A-3107736. This document describes a colour coder with a sensor detecting luminance components which might produce cross-colour interference. The signal from the sensor is low pass filtered and transformed into a control signal. This signal is used to control the attenuation of the luminance signal components which might lead to cross-colour interference.

The control signal described in DE-A-3107736, although described for a colour coder, could in a similar way also be used in a colour decoder. However, the control signal described in DE-A-107736 was not designed for control on a pixel by pixel basis.

GB-A-2 078 054 shows a PAL decoder with a sensor for detecting the presence of movement in the PAL signal. The sensor output is transformed into a control signal. This control signal is used for varying the effective signal combinations used to form the decoder output signals.
The control signal described in GB-A-2 078 054 is not suitable for a control on a pixel by pixel basis.

The object of the present invention is to provide a circuit arrangement by which the pixels can be detected in which cross chrominance might be produced in luminance-chrominance separation on a pixel by pixel basis also allowing a consistency check.

The aim thus set is so achieved according to claim 1 that a luminance signal Y from a Roe comb filter is carried to a bandpass filter, the average frequency thereof being approximately the same as the frequency of the colour subcarrier, whereby only the frequencies expected to produce cross chrominance transmit the filter. The filtered signal is then carried to a mixer where it is mixed with a colour subcarrier frequency signal. Finally, from the output signal of the mixer the frequencies above the zero frequency are filtered with a lowpass filter, whereby a low-frequency output signal proportional to the amount of cross-chrominance of a pixel is provided and checked for consistency on a pixel by pixel basis.

As taught by the invention, a Roe line comb filter known in itself in the art is used so to separate the luminance and chrominance signals that all spatial luminance frequencies, also in the vicinity of the colour subcarrier frequency, remain. The filter causes aliasing at given luminance frequencies, visible as disturbing flickering in the picture being displayed. As to the detector of the invention, this is of no great importance. A chrominance signal provided by the Roe comb filter is filtered in a bandpass filter transmitting only the chrominance signal frequencies which would cause cross chrominance. The chrominance signal frequency thus filtered is transferred down into the vicinity of zero frequency, resulting in a low-frequency signal proportional to the amount of cross-chrominance. Said signal can thereafter be used for various controlling purposes of a comb filter or of a conventionally implemented filter.

The low-frequency signal thus obtained should be filtered spatially because only the larger cross-chrominance areas show as disturbing. A signal representing the cross-chrominance of smaller areas can in such case be filtered off. By this means the noise resistance of the circuit can be improved. Spatial filtering may be based on comparation and on a desired consistency check.

The circuit arrangement of the invention is described more in detail with the aid of the accompanying schematical figures, in which:-
Fig. 1 illustrates a Roe comb filter,
Fig. 2 presents a detector according to the invention, and
Fig. 3 presents a detector in association with a two-mode comb filter.

The principle of a Roe comb filter as shown in Fig. 1 is described above. The Roe filter separates the luminance and chrominance signals so that all spatial luminance frequencies also in the vicinity of the colour subcarrier remain. However, certain diagonal edges at given luminance frequencies cause aliasing, which would be seen as flickering in the picture. Because of aliasing, the luminance signal of the Roe filter cannot be displayed as such on the screen, but because all luminance frequencies remain, the luminance signal can be used for detecting the luminance frequencies causing cross-chrominance.

Figure 2 presents the principle diagram of the invention. A PAL composite signal is carried to the input of a Roe filter 21, which separates the chrominance and luminance signals in the manner of the description associated with Fig. 1. Thus, from the output thereof the luminance signal is provided in which all signals have remained. The filter 2 is thus the prior art filter shown in Fig. 1. A luminance signal Y from the Roe filter is filtered in a bandpass filter 22. If a comb filter is used in separating chrominance / luminance signals, the filter 22 can be identical with the actual chrominance bandpass filter used in the comb filter controlled by the displayed detector. The purpose of the filter 22 is to filter the luminance frequencies which cause no cross-chrominance, whereby a potential luminance signal causing cross-chrominance is obtained from the output of the filter.

The signal provided by the filter is thereafter carried to a mixer 23 in which the signal is mixed down to the vicinity of zero frequency by mixing it into colour subcarrier frequency f_{sc}, whereafter the extra high-frequency results are filtered from the mixing results with a lowpass filter 24, leaving a low-frequency signal proportional to the amount of cross-chrominance. The value of the signal is zero if no sample causing cross-chrominance exists, respectively, the value is above zero if the sample causes a cross error. This signal may already be used as such as one of the control signals of a filter, e.g. comb filter.

According to a preferred embodiment of the invention it is however advantageous to threshold a signal sample thus obtained in a non-linearity element 25 in which the sample is compared to a set threshold value. By setting an appropriate threshold value, only the signals of desired magnitude can be conducted to the output of the circuit, whereby merely the signals causing disturbing cross-chrominance are included. A non-linearity element can be constructed so that the output is zero if the input is lower than the threshold value but when the input is greater than the threshold value, the output is equal to the input.

Alternatively, a non-linearity element can be constructed so that the output thereof is "1" when the input is greater than the threshold value, but "0" when the input is smaller than the threshold value. Hereby, in a subsequent spatial filtering the amount of requisite memory can be minimized. The latter alternative can be implemented by means of a comparator. After the non-linearity element a consistency check of the sample thus obtained is carried out, for instance a spatial averaging. This can be implemented e.g. in an element operating in 3*3 window, the centremost pixel thereof being the pixel being studied. The averaging element 26 comprises at least two line memories, whereby a signal of the pixel, proportional to cross-chrominance detected in the manner described above, can be compared with an equivalent signal of the adjacent pixels, and finally, for the final output signal CC comparable to the cross-chrominance an average of the sample values of the window is taken. With this consistency check the effect of an individual pixel can be equalized in the cross-chrominance area. Since only the larger cross-chrominance areas are found as disturbing, said effect can be equalized by averaging also when the cross-chrominance area contains only one or a few pixels.

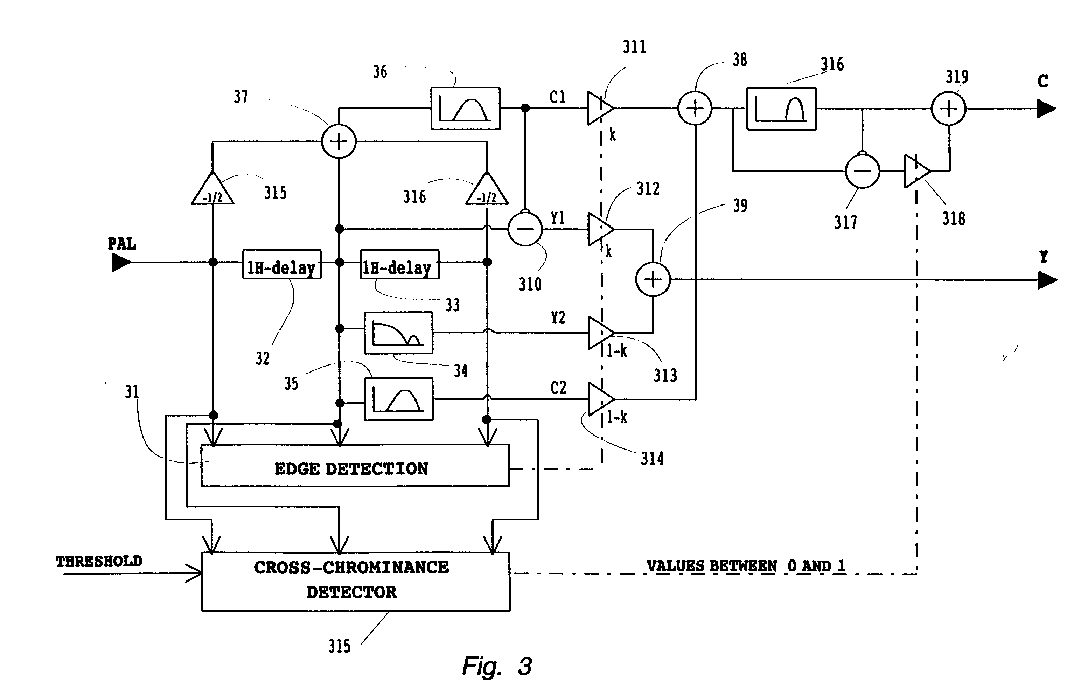

With the circuit of the invention a signal CC comparable to the strength of the cross-chrominance can be produced. The signal can be used in a desired manner as one of the control signals of the comb filter, or, as described above, it can be used e.g. for adjusting the width of a chrominance bandpass in using a conventional low-pass (luminance) / bandpass (chrominance) filter arrangement for the separation. One conceivable method for said purpose is presented in Fig. 3. It illustrates a two-mode comb filter known in the art. The filter comprises an edge detection circuit 31, two one-line long delays 32 and 33 connected in succession, bandpass filters 35,36, a lowpass-suction filter combination 34, three adders 37,38,39, a subtractor 310, constant coefficients 315 and 316, and multipliers 311-314 controlled by the edge detection circuit. The mode of the filter is determined by the edge detection circuit 31. In a first mode, the coefficients 1-k of the multipliers 313 and 314 are given such values that the summing is not affected thereby in the adders 38 and 39, whereby signal C₁ becomes the chrominance signal for the output of the adder 38, and signal Y₁ becomes the luminance signal Y for the output of the adder 39. The chrominance signal C is produced by comb filtering from three vertically consecutive composite signals provided with the aid of the delay lines 32 and 33. The luminance signal is produced simply by subtracting the chrominance signal from the value of the centremost sample derived from between the delay lines in the subtraction circuit 310.

If the existence of an edge is interpreted by the edge detection circuit, in other words, if the subsequent pixels of the vertical direction included in the combing are not sufficiently correlating, the other mode is used, i.e. the coefficients of the multipliers 311-314 are given such values that the chrominance signal C₂ becomes the output of the adder 38, and the luminance signal Y₂ becomes the output Y. This means that conventional filtering is used, whereby the signal Y₂ is filtered by filter 34 and signal C₂ is filtered by filter 35. The outputs of the filter can be glided between said two modes by gliding the values of the coefficients k and k-1 of the multipliers according to a control signal derived from the edge detection circuit 31.

In the comb filter known in the art, the invention can be e.g. so applied that a relatively narrow-banded bandpass filter 316, subtractor 317, multiplier 318 and adder 319 are inserted after the adder 38. The output of the subtractor 317 is formed by the chrominance frequencies which are filtered in the filter 316. According to a control signal provided by the cross-chrominance detector 315, the attenuation / amplification of multiplier 318 can be controlled, and so exert an influence on to what extent the frequency range is added in the output of the filter 316, i.e. a filter has been provided using the present circuit, in which the bandwidth can be changed. If no cross-chrominance is detected by the detector, the amplification of the attenuator / amplifier 318 becomes adjusted to a maximum value, so that an ultimate chrominance signal C has been produced using the entire width of the band (the output signal C is in fact the same as the output signal of the adder 38). If the detector detects a strong cross-chrominance signal, the attenuation of the element 317 is adjusted to a maximum value, whereby no signal passes therefrom into the adder 319, and the output signal C has been provided from the narrow-band filter 316. The output C may therefore be controlled between said two extremes, depending on the detector control.

Using the detector of the invention, the picture errors caused by cross-chrominance can be eliminated almost completely. The detector is appropriate for use in association with any known comb filter in separating chrominance and luminance as well as in association with a circuit employing conventional lowpass (chrominance ) / bandpass (luminance) filtering in which a signal of the detector can be used e.g. for controlling the width of a chrominance bandpass. The detector can be implemented in a variety of ways while being included within the protective scope of the claims.

## Claims

1. A circuit arrangement for detecting pixels causing cross-chrominance from a received sampled PAL composite video signal, said circuit arrangement comprising a comb filter (21) for separating colour difference signals and a luminance signal, comprising
- a first line delay (1) connected in succession, to which an incoming PAL composite signal is conducted, and a second line delay (2), and a centre tap between said delays,
- a first subtractor (3), the inputs thereof being an incoming composite signal and an output signal of the second line delay (2),
- a PAL conversion element (6,7) to convert the polarity of the output signal of the first subtractor (3) to be equivalent to the polarity of a composite signal produced from the centre tap,
- a second subtractor (4), the inputs thereof being a composite signal from the centre tap and a filtered signal derived from the conversion element (6,7), and the output thereof being a luminance signal (Y) in which nearly all original spatial frequencies remain, characterized in that it further comprises:
- a bandpass filter (22) to the input of which the luminance signal (Y) is conducted and the centre frequency whereof is approximately the same as the frequency of the colour subcarrier, so that only the frequencies pass the filter which would cause cross-chrominance,
- a mixer (23), the input thereof being the output signal of the filter and the colour subcarrier frequency signal,
- a lowpass filter (24) to which the output signal of the mixer is conducted and which allows frequencies greater than the zero frequency from the mixing results to pass, thus forming an output signal which is a low-frequency signal indicative of the amount of cross-chrominance of the pixel,
- a comparator (25) to compare said low-frequency signal indicative of the amount of cross-chrominance with a predetermined threshold value and to maintain the output thereof at "zero" if said signal is below the threshold value or at "one" if said signal is above the threshold value,
- an element (26) for carrying out a consistency check to compare the output signal of the comparator with the equivalent signals indicative of the amount of cross-chrominance of the adjacent pixels and the output signal (CC) of which is a final signal indicative of the amount of cross-chrominance.

2. Circuit arrangement according to claim 1, characterized in that the element carrying out the consistency check is a spatial averaging element.

3. Circuit arrangement according to claim 2, characterized in that the element carrying out the spatial averaging is an element operating in a 3*3 window, calculating the average of the samples of the window.

4. Circuit arrangement according to any one of the preceding claims, characterized in that a signal (CC) indicative of the amount of cross-chrominance is used e.g. for adjusting the bandwidth of a chrominance signal in separating the luminance and chrominance signals from the composite video signal.

## Patentansprüche

1. Schaltungsanordnung zur Erfassung von Bildpunkten aus einer empfangenen PAL-FBAS-Signalprobe, die Farbübersprechen verursachen, wobei die genannte Schaltungsanordnung ein Kammfilter (21) zum Trennen von Farbdifferenzsignalen und einem Luminanzsignal umfaßt, umfassend:
- ein erstes in Reihe geschaltetes Zeilenverzögerungsglied (1), zu dem ein eingehendes PAL-FBAS-Signal geleitet wird, und ein zweites Zeilenverzögerungsglied (2) und einen mittleren Abgriff zwischen den genannten Verzögerungsgliedern,
- einen ersten Subtrahierer (3), dessen Eingänge ein eingehendes FBAS-Signal und ein Ausgangssignal des zweiten Zeilenverzögerungsgliedes (2) sind,
- ein PAL-Konvertierungselement (6, 7) zum Konvertieren der Polarität des Ausgangssignals des ersten Subtrahierers (3), so daß sie der Polarität eines FBAS-Signals entspricht, das von dem mittleren Abgriff erhalten wurde,
- einen zweiten Subtrahierer (4), dessen Eingänge ein FBAS-Signal von dem mittleren Abgriff und ein gefiltertes Signal sind, das von dem Konvertierungselement (6, 7) abgeleitet wurde, und dessen Ausgang ein Luminanzsignal (Y) ist, bei dem nahezu alle ursprünglichen räumlichen Frequenzen verbleiben, dadurch gekennzeichnet, daß sie ferner folgendes umfaßt:
- ein Bandpaßfilter (22), zu dessen Eingang das Luminanzsignal (Y) geleitet wird und dessen Mittenfrequenz etwa dieselbe ist wie die Frequenz des Farbhilfsträgers, so daß nur diejenigen Frequenzen das Filter passieren, die Farbübersprechen verursachen würden,
- einen Mischer (23), dessen Eingang das Ausgangssignal des Filters und das Farbhilfsträger-Frequenzsignal ist,
- ein Tiefpaßfilter (24), zu dem das Ausgangssignal des Mischers geleitet wird, und der Frequenzen durchläßt, die größer sind als die Null-Frequenz von den Mischergebnissen, so daß ein Ausgangssignal gebildet wird, das ein Niederfrequenzsignal ist, das die Menge an Farbübersprechen des Bildpunktes anzeigt,
- einen Komparator (25) zum Vergleichen des genannten Niederfrequenzsignals, das die Menge an Farbübersprechen anzeigt, mit einem vorbestimmten Schwellenwert, und um dessen Ausgang auf "Null" zu halten, wenn das genannte Signal unter dem Schwellenwert liegt, oder auf "Eins", wenn das genannte Signal über dem Schwellenwert liegt,
- ein Element (26) zum Durchführen einer Konsistenzprüfung, um das Ausgangssignal des Komparators mit den äquivalenten Signalen zu vergleichen, die die Menge an Farbübersprechen der benachbarten Bildpunkte anzeigen, und deren Ausgangssignal (CC) ein Endsignal ist, das die Menge an Farbübersprechen anzeigt.

2. Schaltungsanordnung nach Anspruch 1, dadurch gekennzeichnet, daß das die Konsistenzprüfung durchführende Element ein räumliches Mittelwertbildungselement ist.

3. Schaltungsanordnung nach Anspruch 2, dadurch gekennzeichnet, daß das den räumlichen Mittelwert bildende Element ein in einem 3*3 Fenster arbeitendes Element ist, das den Mittelwert der Proben des Fensters errechnet.

4. Schaltungsanordnung nach einem der vorherigen Ansprüche, dadurch gekennzeichnet, daß ein Signal (CC), das die Menge an Farbübersprechen anzeigt, benutzt wird, z.B. zum Justieren der Bandbreite eines Chrominanzsignals beim Trennen der Luminanz- und Chrominanzsignale von dem FBAS-Signal.

## Revendications

1. Agencement de circuit pour la détection d'éléments d'image produisant une diaphotie luminance/chrominance dans un signal vidéo composite PAL échantillonné reçu, ledit agencement de circuit comprenant un filtre-peigne (21) pour séparer des signaux de différence de couleur et un signal de luminance, comprenant :
- une première ligne à retard (1) connectée à la suite, vers laquelle est dirigé un signal composite PAL en entrée, et une seconde ligne à retard (2), et une prise centrale entre lesdites lignes à retard,
- un premier soustracteur (3) dont les signaux d'entrée sont un signal composite en entrée et un signal de sortie de la seconde ligne à retard (2),
- un élément de conversion PAL (6, 7) pour convertir la polarité du signal de sortie du premier soustracteur (3) pour qu'elle soit équivalente à la polarité d'un signal composite produit par la prise centrale,
- un second soustracteur (4) dont les signaux d'entrée sont un signal composite provenant de la prise centrale et un signal filtré dérivé de l'élément de conversion (6, 7), et dont le signal de sortie est un signal de luminance (Y) dans lequel presque toutes les fréquences spatiales initiales subsistent,
caractérisé en ce qu'il comprend en outre :
- un filtre passe-bande (22) vers l'entrée duquel est dirigé le signal de luminance (Y) et dont la fréquence centrale est approximativement identique à la fréquence de la sous-porteuse de chrominance, pour que seules les fréquences produisant une diaphotie luminance/chro-minance traversent le filtre,
- un mélangeur (23) dont le signal d'entrée est le signal de sortie du filtre et le signal de fréquence de sous-porteuse de chrominance,
- un filtre passe-bas (24) vers lequel est dirigé le signal de sortie du mélangeur et qui permet le passage des fréquences supérieures à la fréquence zéro provenant des résultats du mélange, un signal de sortie étant ainsi formé qui est un signal à basse fréquence indicatif de la quantité de diaphotie luminance/chrominance de l'élément d'image,
- un comparateur (25) pour comparer ledit signal à basse fréquence indicatif de la quantité de diaphotie luminance/chrominance à une valeur de seuil prédéterminée et pour maintenir à "zéro" son signal de sortie si ledit signal est au-dessous de la valeur de seuil ou à "un" si ledit signal est au-dessus de la valeur de seuil,
- un élément (26) pour exécuter un contrôle de cohérence afin de comparer le signal de sortie du comparateur aux signaux équivalents indicatifs de la quantité de diaphotie luminance/chrominance des éléments d'image adjacents, son signal de sortie (CC) étant un signal final indicatif de la quantité de diaphotie luminance/chrominance.

2. Agencement de circuit selon la revendication 1, caractérisé en ce que l'élément exécutant le contrôle de cohérence est un élément de détermination de moyenne spatiale.

3. Agencement de circuit selon la revendication 2, caractérisé en ce que l'élément exécutant la détermination de moyenne spatiale est un élément fonctionnant dans une fenêtre 3*3, calculant la moyenne des échantillons de la fenêtre.

4. Agencement de circuit selon l'une quelconque des revendications précédentes, caractérisé en ce qu'un signal (CC) indicatif de la quantité de diaphotie luminance/chrominance est utilisé, par exemple, pour ajuster la largeur de bande d'un signal de chrominance dans une séparation des signaux de luminance et de chrominance du signal vidéo composite.
